# EUROPÄISCHE PATENTSCHRIFT

(11) **EP 0 405 351 B1**
(45) Veröffentlichungstag und Bekanntmachung des Hinweises auf die Patenterteilung: **09.03.1994**
(21) Anmeldenummer: 90111856.2
(22) Anmeldetag: 22.06.1990
(51) Int. Cl.: E05F 15/00, H01B 7/10

(54) **Sicherheitskontaktschiene**
Safety contact rail
Rail de contact de sécurité

(30) Priorität: 30.06.1989 DE 3921533
(43) Veröffentlichungstag der Anmeldung: 02.01.1991
(73) Patentinhaber: Beckhausen, Karlheinz, D-50937 Köln (DE)
(72) Erfinder: Beckhausen, Karlheinz, D-50937 Köln (DE)
(74) Vertreter: Nau, Walter, Dipl.-Ing.

(56) Entgegenhaltungen:
- DE-A- 2 808 964
- DE-A- 3 304 400
- FR-A- 1 071 182
- FR-E- 32 603
- GB-A- 465 069
- GB-A- 996 167

## Beschreibung

Die Erfindung bezieht sich auf eine Sicherheitskontaktschiene für kraftbetätigte Anlagen, wie Rolltore, Rollgitter usw. und Hebe-, Arbeitsbühnen und dergl. sowie zur Absicherung beweglicher Gegenstände, wie Maschinen oder Räume, mit einem elastischen, aus einem elektrisch nicht leitenden Material, vorzugsweise Gummi, hergestellten Hohlprofil, das zumindest an seiner Innenseite durch Beigabe von elektrisch leitenden Stoffen, wie Ruß, Graphit, Metallpulver und dergl. elektrisch leitende Flächen aufweist, deren gegenseitiges Berühren zu einem Schaltimpuls führt.

Eine gattungsgemäße Sicherheitskontaktschiene mit entsprechendem Hohlprofil ist aus der DE-A- 33 04 400 bekannt. Der prinzipielle Aufbau des Hohlprofils hat sich auch als günstig erwiesen. Je nach Krafteinwirkung bzw. Kraftrichtung könnte jedoch eine verbesserte Kontaktgabe im Hohlprofil sowie ein Verformungsweg nach Impulsauslösung wünschenswert sein.

Die GB-A- 465 069 beschreibt ein Schaltprofil, das aus einem schlauchartigen Gebilde besteht, an bzw. in dessen inneren Wänden Längsnuten oder Längsrillen vorgesehen sind, in denen leitfähige Stränge als zusätzliche Teile eingefügt sind. Um diese zusätzlichen Stränge zu halten, weist der Schlauch Hinterschneidungen auf, die die Stränge mit Abstand zueinander führen. Aufgrund der Anzahl und Anordnung der Stränge können bei diesem Schaltprofil auch dann Impulsauslösungen erfolgen, wenn aus verschiedenen Richtungen Kräfte auf das Schaltprofil wirken. Eine zusätzlicher Verformungsweg nach Impulsauslösung und eine verbesserte Kontaktgabe ist dadurch jedoch nicht gewährleistet.

Aufgabe der vorliegenden Erfindung ist es, die geschilderten Nachteile zu beheben und das Hohlprofil dahingehend zu verbessern, daß eine verbesserte Kontaktgabe und damit Impulsauslösung durch das Hohlprofil gewährleistet ist. Außerdem soll auch nach der Impulsauslösung ein Nachverformungsweg vorgesehen sein. Die Aufgabe der Erfindung wird dadurch gelöst, daß das Hohlprofil im Inneren zumindest zwei leistenartige, elektrisch leitende Vorsprünge und zumindest eine entlang des Hohlprofils geführte, ebenfalls elektrisch leitende Gegenfläche aufweist, daß die Vorsprünge und die Gegenfläche Bestandteile von Querschnitten sind, die durch die Beigabe von elektrisch leitenden Stoffen insgesamt elektrisch leitend sind und daß die Vorsprünge gegenüber der Gegenfläche so angeordnet sind, daß sie nach der Impulsauslösung eine zusätzliche Wegstrecke entlang der Gegenfläche gleiten können, ohne auf den gegenüberliegenden nicht leitenden Grund des Hohlprofils zu gelangen. Die leistenartigen Vorsprünge können dabei durch nicht leitende Zwischenschichten voneinander isoliert sein. Sie können aber auch eine elektrisch leitende Einheit bilden. Durch diese Ausgestaltung der Erfindung erfolgt bei hinreichendem Zusammendrücken des Hohlprofils eine Mehrfachkontaktgabe innerhalb des Hohlprofils, da die leistenartigen Vorsprünge mit der Gegenfläche entsprechend ihrer Anzahl eine Vielzahl von elektrischen Kontaktgaben ermöglichen. Je nach Ausgestaltung der leistenartigen Vorsprünge und ihrer Trennung durch isolierende Zwischenschichten kann auch bei einem entsprechenden elektrischen Anschluß eine Kontaktgabe der leistenartigen Vorsprünge untereinander, ggfs. über die Gegenfläche erfolgen. Je nach der räumlichen Ausgestaltung können auch eine vielzahl leistenartiger Vorsprünge nebeneinander angeordnet sein. Auch die Gegenfläche kann entsprechende leistenartige Vorsprünge aufweisen.

In vorteilhafter Weise sind nach den Merkmalen der Ansprüche 4 bis 6 zwei leistenartige Vorsprünge nach Art von Rippen vorgesehen, denen eine teilweise aus der Innenfläche des Hohlprofils vorstehende Profilleiste entgegensteht, so daß sich ein freier, unverformter Innenquerschnitt des Hohlprofils etwa der Form eines dreiblättrigen Kleeblattes ergibt. Dadurch erfolgt sowohl ei ne vorteilhafte Kontaktgabe bei seitlicher Krafteinwirkung als auch bei mittiger Krafteinwirkung, wobei in vorteilhafter Weise eine Doppelkontaktgabe sichergestellt ist. Dabei wird darüberhinaus sichergestellt, daß nach der Kontaktgabe noch ein weiterer Verformungsweg zur Verfügung steht, ohne daß das Material des Hohlprofils selbst gequetscht wird.

Die Profilleiste kann auch im wesentlichen einen kreisförmigen Querschnitt haben und über einen bzw. mehrere Stege mit Abstand zur Innenwand innerhalb des Hohlprofils angeordnet sein, wobei dadurch eine Verlegung der Profilleiste an die optimale Stelle, z.B. auch in die Mitte, erfolgen kann. Die Profilleiste kann auf ihrer Oberfläche vorzugsweise eine Vielzahl leistenartiger Vorsprünge haben, so daß auch hier bei entsprechender Gegenfläche die beschriebene Verzahnung mit reibender Bewegung eintritt.

In weiterer Ausbildung der Erfindung wird nach den Ansprüchen 9 und 10 vorgeschlagen, daß auf der Gegenseite der Profilleiste eine im wesentlichen U-förmige Nut vorgesehen ist, an deren Seitenschenkeln nach innen vorstehende leistenartige Vorsprünge vorgesehen sind. Der Abstand dieser vorstehenden leistenartigen Vorsprünge untereinander kann geringer als der Querschnitt der Profilleiste sein, so daß sich auf diese Weise zwei verschiedene Effekte einstellen. Zum einen erfolgt dann, wenn die komplette bzw. ein Großteil der Innenfläche der Hinterschneidungsnut elektrisch leitend ist, eine besonders intensive Kontaktgabe zwischen der Profilleiste und den vorstehenden leistenartigen Vorsprüngen im U-Profil. Zum anderen erfolgt eine Verhakung der Profilleiste innerhalb des U-Profils hinter den vorstehenden leistenartigen Vorsprüngen. Dadurch läßt sich mit einfachen Mitteln ohne weiteres erkennen, wo ein Zusammendrücken des Hohlprofils und eine Auslösung des Impulses erfolgte. Das Hohlprofil kann dann durch entsprechende Zugkraft wieder entriegelt werden. Zu diesem Zweck ist in vorteilhafter Weise am Hohlprofil ein Außenwulst vorgesehen, an dem das Hohlprofil entriegelt werden kann. Eine Entriegelung kann auch durch einen Überdruck im Innern des Profils erfolgen. Darüberhinaus wird je nach Länge der Schenkel des U-Profils die Profilleiste auch geführt.

Eine günstige Doppelkontaktgabe erfolgt auch dann, wenn das Gummihohlprofil zwei parallel zueinander angeordnete Kammern aufweist, wobei zwischen den Kammern in beide hineinragende leistenartige, elektrisch leitende Vorsprünge vorgesehen sind, denen elektrisch leitende Gegenflächen in den Kammern zugeordnet sind. Die Oberflächen können auch hier mit einer Vielzahl von leistenartigen Vorsprüngen versehen sein. Bei diesem Hohlprofil kann die Kontaktgabe zum einen jeweils einzeln nacheinander erfolgen, wobei diese Impulse differenziert aufgenommen werden können, wodurch auch die Intensität der Krafteinwirkung ermittelt werden kann, da bei geringer Krafteinwirkung nur eine Kammer und bei höherer Krafteinwirkung beide Kammern ausgelöst werden. Dann ist jede Kammer einzeln an eine Auswerteinheit angeschlossen. Die in beide Kammern ragenden leistenartigen Vorsprünge können aber auch eine elektrisch. leitende Einheit mit durchgehend leitendem Querschnitt bilden, so daß nur eine Anschlußleitung nötig ist. Desweiteren kann diese Einheit auch ohne elektrischen Anschluß auskommen. Dann erfolgt die Kontaktgabe von einer Gegenfläche zur anderen über die dazwischen angeordnete Einheit, aber erst bei Verformung beider Kammern, d.h. nach einem relativ großen Verformungsweg.

Um einen genügend großen Querschnitt für die elektri sc he Leitfähigkeit zur Verfügung zu stellen, wird vorgeschlagen, die leistenartigen elektrisch leitenden Vorsprünge bzw. Profilleisten und elektrisch leitenden Gegenflächen in ihrer vollen Wandstärke durchgehend durch Beimischungen elektrisch leitend zu machen und auch den Vorsprungsquerschnitt bzw. den Profilleistenquerschnitt bis in die Wände des Hohlprofils hinein umfassend elektrisch leitend auszuführen.

In vorteilhafter Weise haben die Hohlprofile gemäß Anspruch 13 vorzugsweise auf gegenüberliegenden Außenseiten zueinander passende nut- und federförmige Hinterschneidungsprofile, mittels denen mehrere Hohlprofile aneinander befestigbar sind, so daß mit einem einheitlichen Hohlprofil ein Zwei- bzw. Mehrkammerprofil hergestellt werden kann.

Zur weiteren Erläuterung der Erfindung wird auf die Zeichnungen verwiesen, in denen mehrere Ausführungsbeispiele vereinfacht dargestellt sind.

Es zeigen:
- Fig. 1 bis 3: ein bevorzugtes Ausführungsbeispiel des Hohlprofils in verschiedenen Verformungszuständen im Querschnitt,
- Fig. 4 und 5: Einzelprofile im Querschnitt, die zu Doppel- bzw. Mehrfachprofilen zusammenfügbar sind,
- Fig. 6: ein Hohlprofil im Querschnitt, bei dem eine Verrastung im Verformungszustand möglich ist,
- Fig. 7: ein modifiziertes Hohlprofil, mit einer daran angeschlossenen Nachlaufkammer und
- Fig. 8 und 9: ein Hohlprofil mit Doppelkammer.

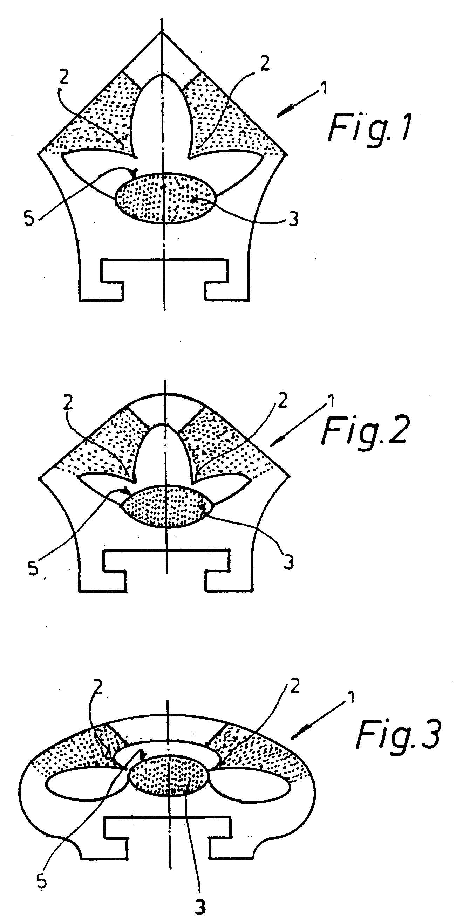

In den Figuren 1 bis 9 ist, soweit im einzelnen dargestellt, mit 1 ein Hohlprofil bezeichnet, das als Auslöseeinheit vorzugsweise einer Sicherheitskontaktschiene benutzt wird, wobei das Hohlprofil 1 durch Beigaben von leitenden Stoffen, wie Ruß, Graphit, Metallpulver und dergl. elektrisch leitende Flächen aufweist, deren gegenseitige Berührung zu Schaltimpulsen in der Auswerteeinheit führt, die mittels Leitungen mit den Flächen in Verbindung steht, und dadurch kraftbetätigte Anlagen bzw. Gegenstände verschiedenster Art stopt bzw. in ihre Bewegungsrichtung umschaltet. Es sei darauf hingewiesen, daß je nach Einsatzfall das Hohlprofil sowohl an dem beweglichen als auch an dem feststehenden Gegenteil angebracht werden kann. Das Hohlprofil kann auch als Schutz- bzw. Sicherheitsprofil an Kraftfahrzeugen benutzt werden.

In den Fig. 1 bis 3 weist das Hohlprofil 1 im Inneren zwei leistenartige Vorsprünge 2, auch als Rippen bezeichnet, auf. Diese bilden, was durch die Punktierung in den Figuren angedeutet ist, durch Beimischung von leitenden Stoffen, elektrisch leitende Querschnitte. Auf der gegenüberliegenden Seite befindet sich eine mit 3 bezeichnete Profilleiste) die nur teilweise aus der Innenwand hervortritt, aber, durch die Punktierung angedeutet, einen elektrisch leitenden Querschnitt 5 bildet. Wird nunmehr das Profil, wie dem Bewegungsablauf der Figuren 1 bis 3 zu entnehmen ist) zusammengedrückt, so berühren zunächst eine bzw. beide leistenförmigen Vorsprünge 2 die Profilleiste 3 und lösen dabei Impulse aus. Von Bedeutung ist, daß auch nach der Impulsauslösung eine zusätzliche Wegstrecke bzw. ein weiterer Verformungsweg möglich ist, ohne daß das Material des Hohlprofils gequetscht wird, da die leistenförmigen Vorsprünge 2 bzw. die Rippenspitzen entlang der Profilleiste 3 gleiten können, ohne auf den gegenüberliegenden nicht leitenden Grund des Hohlprofils zu gelangen. Desweiteren hat auch die Ausnehmung zwischen den leistenförmigen Vorsprüngen 2 bzw. Rippen genügend Freiraum, um einen Nachlauf zu ermöglichen. Das Hohlprofil ist vorzugsweise aus Gummi hergestellt. Dies muß jedoch nicht sein, da auch andere Kunststoffmaterialien bestens geeignet sind. Der nicht punktierte Bereich des Hohlprofilquerschnitts ist aus einem Material hergestellt, das nicht leitend ist.

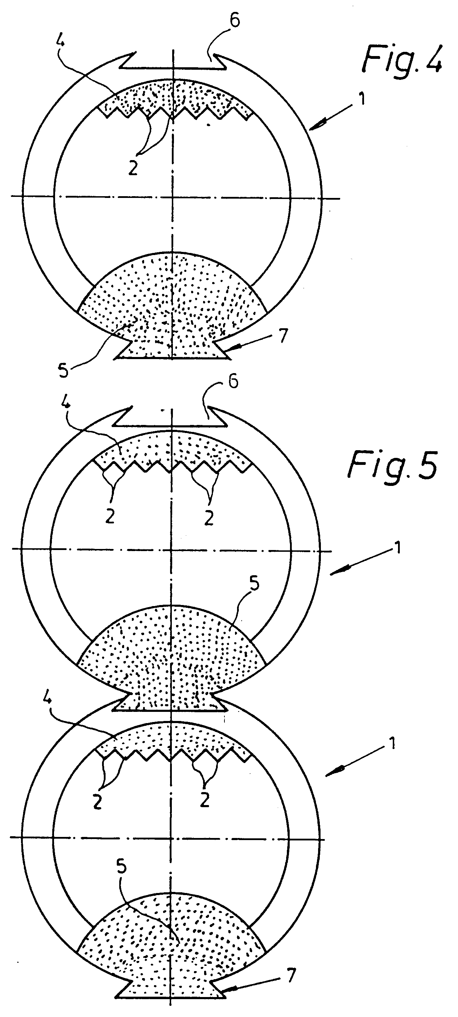

Das Hohlprofil gemäß den Figuren 4 und 5 hat vorwiegend einen ringförmigen Querschnitt, wobei sowohl im Fußbereich als auch im gegenüberliegenden Bereich leitende Querschnitte 4 und 5 vorgesehen sind. Der dem Fuß gegenüberliegende leitende Querschnitt 4 weist ebenfalls leistenförmige Vorsprünge 2 auf. Dabei sind mehrere Vorsprünge 2 vorgesehen, so daß, je nach Berührungsangriff, eine Mehrfachkontaktierung erfolgt. Wie den punktierten Querschnitten 4 und 5 zu entnehmen ist, sind auch bei dem Hohlprofil gemäß den Fig. 4 und 5 nicht nur die Oberflächen sondern größere Querschnittsbereiche durch Zugabe von leitenden Stoffen leitend gemacht worden, so daß auch hier die Leitfähigkeit erhöht bzw. der Widerstand entlang des Hohlprofils 1 verringert wird. Das Hohlprofil gemäß den Figuren 4 und 5 hat mit 6 bezeichnete Nuten und mit 7 bezeichnete Federn, so daß eine Befestigung eines Hohlprofils an dem anderen ohne weiteres möglich ist, da durch die Hinterschneidung des Nut-Federsystems eine feste Verklammerung erfolgt. Der nicht punktierte Bereich des Hohlprofilquerschnitts ist aus einem Material hergestellt, das nicht leitend ist.

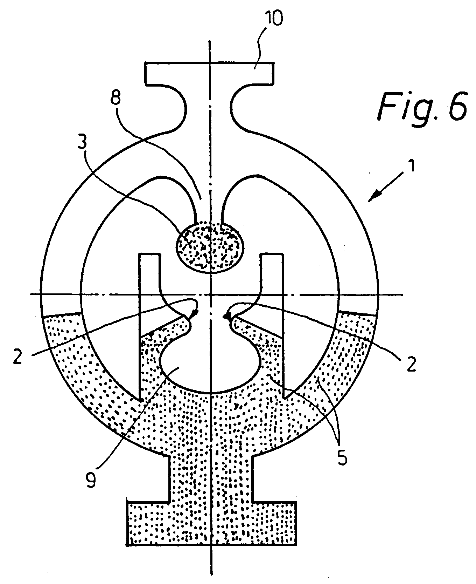

Das Hohlprofil gemäß Fig. 6 hat ebenfalls im wesentlichen kreisförmigen Querschnitt und ist, wie den weißen und punktierten Flächen zu entnehmen ist, teilweise leitend und teilweise nicht leitend. Die mit 3 bezeichnete Profilleiste ist vollständig leitend. Sie ist an einem Steg 8 am Hohlprofil befestigt. Auf der gegenüberliegenden Seite ist eine mit 9 bezeichnete Hinterschneidungsnut angeordnet, die im wesentlichen U-förmigen Querschnitt aufweist und innerhalb der Seitenschenkel leistenartige Vorsprünge 2 trägt. Auch bei diesem Hohlprofil erfolgt eine Doppelkontaktierung zwischen der Profilleiste 3 und den Vorsprüngen 2 der Hinterschneidungsnut 9, welche ebenfalls aus leitendem Material, wie in Fig. 6 dargestellt, bestehen. Darüberhinaus erfolgt eine Verhakung der Profilleiste 3 hinter den leistenförmigen Vorsprüngen 2, so daß auch optisch sichtbar ist, wo das Hohlprofil zusammengepreßt worden ist. Je nach Abmessungen der Profilleiste 3 und der Hinterschneidungsnut 9 ist diese Verhakung mehr oder weniger stark bzw. sie kann auch vollständig entfallen. Zur einfacheren Enthakung des Hohlprofils ist im Bereich des Steges 8 am Hohlprofil ein Wulst 10 vorgesehen, durch den eine Handhabung des Hohlprofils sichergestellt ist.

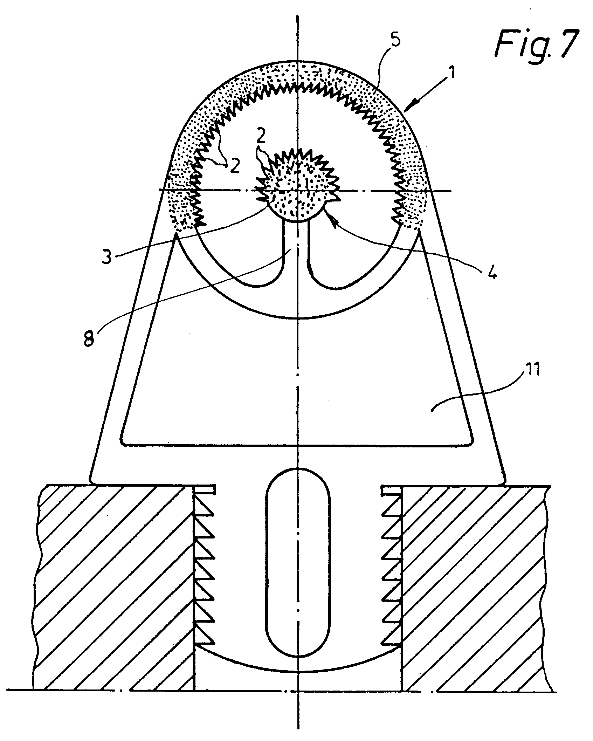

Das Hohlprofil gemäß Fig. 7 ist ebenfalls aus teils leitendem, teils nicht leitendem Material hergestelt, was den weißen und punktierten Flächen entspricht. Die Profilleiste 3, die ebenfalls an einem Steg 8 befestigt ist, ist bis ins Zentrum des Hohlprofils 1 verschoben. Sie weist eine Vielzahl von leistenförmigen Vorsprüngen 2 auf, wobei der größte Teil des Hohlprofils 1 auf seiner Innenseite ebenfalls eine größere Anzahl leistenförmiger Vorsprünge 2 aufweist. Bei diesem Profil erfolgt nicht nur eine Doppel- ,sondern eine Mehrfachkontaktgabe zwischen den leitenden Flächen beim Zusammendrücken, so daß unter allen Umständen sichere Schaltimpulse entstehen. Das Hohlprofil 1 gemäß Fig. 7 weist weiterhin eine Nachlaufkammer 11 auf, die keine Schaltfunktion hat. Sie soll aber sicherstellen, daß der bewegliche Teil der Anlage, ohne daß das Hohlprofil unnötig gepreßt wird, sich noch ein Stück bewegen kann bis es zur Ruhe kommt.

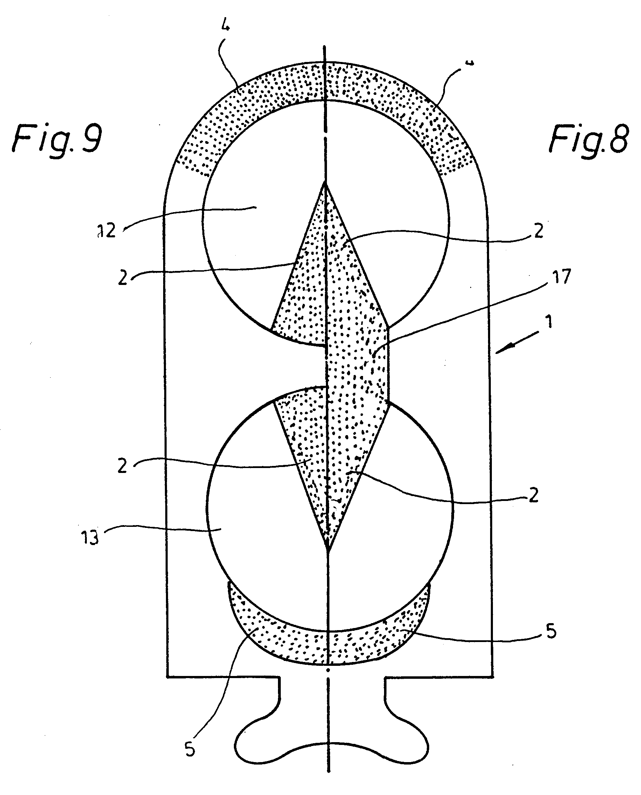

Das Hohlprofil 1 gemäß Fig. 8 und 9 hat zwei Kammern 12 und 13, die im Inneren im wesentlichen einen runden Querschnitt aufweisen. Auch hier sind die leitenden und nicht leitenden Querschnitte 4 und 5 durch weiße Flächen bzw. punktierte Flächen dargestellt. In Fig. 8 ist zwischen den Kammern 12 und 13 eine leitende Einheit 17 vorgesehen, die in beide Kammern 12 und 13 hineinragende leistenartige Vorsprünge 2 aufweist, denen elektrisch leitende Gegenflächen in den Kammern 12 und 13 zugeordnet sind. Je nach Anschluß dieses Hohlprofils kann eine Doppel kontaktgabe erfolgen, wenn an allen leitenden Querschnitten 4, 5 und 17 getrennte Zuleitungen angeschlossen sind, so daß eine Berührung der äußeren Gegenfläche mit dem Vorsprung 2 in der Kammer 12 und eine Berührung des Vorsprungs 2 in der Kammer 13 mit der anderen Gegenfläche einen Impuls auslöst. Werden nur die äußeren leitenden Querschnitte 4 und 5 an Leitungen und ein Schaltgerät angeschlossen, so müssen beide Kammern zusammengedrückt werden, um eine Kontaktierung über die Einheit 17 und die beiden leistenartigen Vorsprünge 2 zu gewährleisten. Wie Fig. 9 zu entnehmen ist, sind die in die Kammern 12 und 13 hineinragenden leistenartigen Vorsprünge 2 elektrisch voneinander getrennt, da zwischen ihnen elektrisch nicht leitender Gummi, durch die weiße Fläche gekennzeichnet, vorgesehen ist.

## Patentansprüche

1. Sicherheitskontaktschiene für kraftbetätigte Anlagen, wie Rolltore, Rollgitter usw. und Hebe-, Arbeitsbühnen und dergl. sowie zur Absicherung beweglicher Gegenstände, wie Maschinen oder Räume, mit einem elastischen, aus einem elektrisch nicht leitenden material, vorzugsweise Gummi, hergestellten Hohlprofil (1), das zumindest an seiner Innenseite durch Beigabe von elektrisch leitenden Stoffen, wie Ruß, Graphit, Metallpulver und dergl. elektrisch leitende Flächen aufweist, deren gegenseitiges Berühren zu einem Schaltimpuls führt, dadurch gekennzeichnet, daß das Hohlprofil (1) im Inneren zumindest zwei leistenartige, elektrisch leitende Vorsprünge (2) und zumindest eine entlang des Hohlprofils geführte, ebenfalls elektisch leitende Gegenfläche aufweist, daß die Vorsprünge (2) und die Gegenfläche Bestandteile von Querschnitten (3, 4 und 5) sind, die durch die Beigabe von elektrisch leitenden Stoffen insgesamt elektrisch leitend sind und daß die Vorsprünge (2) gegenüber der Gegenfläche so angeordnet sind, daß die Vorsprünge (2) nach der Impulsauslösung eine zusätzliche Wegstrecke entlang der Gegenfläche gleiten können, ohne auf den gegenüberliegenden nicht leitenden Grund des Hohlprofils zu gelangen.

2. Sicherheitskontaktschiene nach Anspruch 1,
dadurch gekennzeichnet, daß die leistenartigen Vorsprünge (2) durch nicht leitende Zwischenschichten voneinander isoliert sind.

3. Sicherheitskontaktschiene nach einem der vorhergehenden Ansprüche,
dadurch gekennzeichnet, daß eine Vielzahl leistenartiger Vorsprünge (2) nebeneinander angeordnet ist.

4. Sicherheitskontaktschiene nach einem der vorhergehenden Ansprüche,
dadurch gekennzeichnet, daß zwei leistenartige Vorsprünge (2) nach Art von Rippen vorgesehen sind, wobei der freie, unverformte Innenquerschnitt des Hohlprofils (1) in etwa die Form eines dreiblättrigen Kleeblattes hat.

5. Sicherheitskontaktschiene nach einem der vorhergehenden Ansprüche,
dadurch gekennzeichnet, daß der elektrisch leitende Gegenquerschnitt (5) als zumindest teilweise aus der Innenfläche des Hohlprofils vorstehende Profilleiste (3) ausgebildet ist.

6. Sicherheitskontaktschiene nach einem der vorhergehenden Ansprüche,
dadurch gekennzeichnet, daß die Profilleiste (3) einen teilkreisförmigen Querschnitt hat und an der Innenwand des Hohlprofils (1) angeordnet ist.

7. Sicherheitskontaktschiene nach einem der vorhergehenden Ansprüche,
dadurch gekennzeichnet, daß die Profilleiste (3) im wesentlichen einen kreisförmigen Querschnitt hat und über einen Steg (8) bzw. Stege mit Abstand zur Innenwand innerhalb des Hohlprofils (1) angeordnet ist.

8. Sicherheitskontaktschiene nach einem der vorhergehenden Ansprüche,
dadurch gekennzeichnet, daß die Profilleiste (3) auf ihrer Oberfläche eine Vielzahl leistenartiger Vorsprünge (2) aufweist.

9. Sicherheitskontaktschiene nach einem der vorhergehenden Ansprüche,
dadurch gekennzeichnet, daß auf der der Profilleiste (3) gegenüberliegenden Innenseite des Gummihohlprofils eine der Profilleiste in den Abmessungen angepaßte Hinterschneidungsnut (9) vorgesehen ist, deren Innenflächen zumindest im Teilumfangsbereich elektrisch leitend ausgeführt sind.

10. Sicherheitskontaktschiene nach einem der vorhergehenden Ansprüche,
dadurch gekennzeichnet, daß die Hinterschneidungsnut (9) im wesentlichen einen U-förmigen Querschnitt aufweist und daß innerhalb der Seitenschenkel nach innen vorstehende leistenartige Vorsprünge (2) vorgesehen sind.

11. Sicherheitskontaktschiene nach einem der vorhergehenden Ansprüche,
dadurch gekennzeichnet, daß das Hohlprofil (1) zwei parallel zueinander angeordnete Kammern (12 und 13) aufweist, wobei zwischen den Kammern in beide hineinragende leistenartige, elektrisch leitende Vorsprünge (2) vorgesehen sind, denen elektrisch leitende Gegenflächen in den Kammern zugeordnet sind.

12. Sicherheitskontaktschiene nach einem der vorhergehenden Ansprüche,
dadurch gekennzeichnet, daß die leistenartigen, elektrisch leitenden Vorsprünge (2) bzw. Profilleisten (3) und elektrisch leitenden Gegenflächen ihre volle Wandstärke umfassend bzw. den vollen Vorsprungsquerschnitt bzw. Profilleistenquerschnitt umfassend elektrisch leitend ausgeführt sind.

13. Sicherheitskontaktschiene nach einem der vorhergehenden Ansprüche,
dadurch gekennzeichnet, daß die Hohlprofile (1) vorzugsweise auf gegenüberliegenden Außenseiten zueinander passende nut(6) und federförmige (7) Hinterschneidungsprofile aufweisen, mittels denen mehrere Hohlprofile (1) aneinander befestigbar sind.

## Claims

1. A safety contact rail for power-actuated devices such as rolling shutter doors, rolling grilles etc, and for lifting and working platforms and the like, as well as for securing moving objects such as machines or rooms, with an elastic hollow section (1) of non-electrically conducting material, preferably rubber, provided at least on its inner side with electrically-conducting surfaces through the addition of materials such as carbon black, graphite, metal powder and the like, whereby mutual contact of said surfaces gives rise to a switching pulse, characterised in that the hollow section (1) is provided in its interior with at least two strip-like, electrically-conducting projections (2) and at least one opposing surface, also electrically-conducting, running along the hollow section, and that the projections (2) and the opposing surfaces are constituent parts of cross-sections (3, 4 and 5) which are rendered electrically-conducting in their entirety through the addition of electrically-conducting materials, and that the projections (2) are arranged with respect to the opposing surface such that, following triggering of the pulse, the projections (2) can slide along an additional path without reaching the opposite non-conducting base of the hollow section.

2. A safety contact rail according to Claim 1, characterised in that the strip-like projections (2) are insulated from each other through non-conducting intermediate layers.

3. A safety contact rail according to either Claim 1 or 2, characterised in that a plurality of strip-like projections (2) are arranged adjacent to each other.

4. A safety contact rail according to any one of the preceding claims, characterised in that it is provided with two strip-like projections (2) in the form of ribs, whereby the free, non-deformed internal cross-section of the hollow section (1) has the approximate shape of a trifoliate clover leaf.

5. A safety contact rail according to any one of the preceding claims, characterised in that the electrically-conducting counter-cross-section (5) is formed, at least in part, from the inner surface of the section strip (3) protruding in front of the hollow section.

6. A safety contact rail according to any one of the preceding claims, characterised in that the section strip (3) has a part-circular cross-section and is arranged against the inner wall of the hollow section (1).

7. A safety contact rail according to any one of the preceding claims, characterised in that the section strip (3) has a substantially circular cross-section and is arranged at a distance from the inner wall within the hollow section (1) via one or more cross-pieces (8).

8. A safety contact rail according to any one of the preceding claims, characterised in that the section strip (3) is provided with a plurality of strip-like projections (2) on its surface.

9. A safety contact rail according to any one of the preceding claims, characterised in that an undercut groove (9) of appropriate dimensions is provided on that inner side of the rubber hollow section opposite the section strip (3), with the interior surfaces of the undercut groove being electrically conducting over at least part of its circumference.

10. A safety contact rail according to any one of the preceding claims, characterised in that the undercut groove (9) has a predominantly U-shape cross-section and that inwardly-facing strip-like projections (2) are provided within the lateral limb.

11. A safety contact rail according to any one of the preceding claims, characterised in that the hollow section (1) has two chambers (12 and 13) parallel to each other, and electrically-conducting projections (2) are arranged between the chambers (12 and 13) and project into them, with electrically-conducting counter-surfaces in the chambers assigned to the projections (2).

12. A safety contact rail according to any one of the preceding claims, characterised in that the strip-like electrically-conducting projections (2) or section strips (3) and the electrically-conducting counter surfaces conduct electricity over their entire wall thickness, full projection cross-section, or section strip cross-section.

13. A safety contact rail according to any one of the preceding claims, characterised in that facing external surfaces of the hollow sections (1) are preferably provided with groove (6) and tongue (7) shaped undercut sections matched to each other and by means of which a plurality of hollow sections (1) can be secured to each other.

## Revendications

1. Rail contacteur de sécurité destiné aux installations mobiles sous l'action d'une force motrice, telles que portes roulantes, volets roulants, portique de travail ou de levage, etc. et servant également à assurer la sécurité d'objets mobiles, tels que des machines ou des volumes, comportant un profilé creux fait d'un matériau non conducteur, de préférence du caoutchouc, présentant au moins sur sa paroi interne des surfaces conductrices obtenues par apport de matériaux conducteurs tels que noir de carbone, graphite, poudre métallique et dont la venue en contact l'une sur l'autre déclenche une impulsion de courant, caractérisé en ce que le profilé creux (1) présente à l'intérieur au moins deux bossages conducteurs (2) en forme de listeaux associés à au moins une contrepartie également conductrice courant le long du profilé, les bossages (2) et la contrepartie appartenant à des parties (3, 4 et 5) de la section du profilé rendues conductrices par apport de matériaux conducteurs, les bossages (2) étant disposés, par rapport à la contrepartie de manière qu'après le déclenchement de l'impulsion les bossages peuvent effectuer un déplacement supplémentaire en glissant le long de la contrepartie sans aller jusqu'à atteindre le fond non conducteur du profilé creux.

2. Rail contacteur de sécurité selon la revendication 1, caractérisé en ce que les bossages (2) en forme de listeaux sont isolés entre eux par des couches intercalaires non conductrices.

3. Rail contacteur de sécurité selon une des revendications précédentes, caractérisé en ce qu'il comporte une pluralité de bossages (2) en forme de listeaux, disposés côte à côte.

4. Rail contacteur de sécurité selon l'une des revendications précédentes, caractérisé en ce que deux bossages (2) sont constitués par des nervures donnant à la section du volume interne du profilé (1) sensiblement la forme d'un trèfle à trois feuilles.

5. Rail contacteur de sécurité selon l'une des revendications précédentes, caractérisé en ce que la section (5) constituant la contrepartie conductrice a la forme d'un listeau profilé (3) constitué au moins en partie par un relief de la paroi interne du profilé creux (1).

6. Rail contacteur de sécurité selon l'une des revendications précédentes, caractérisé en ce que le listeau profilé (3) a une section partiellement circulaire et est placé sur la paroi interne du profilé creux (1).

7. Rail contacteur de sécurité selon l'une des revendications précédentes, caractérisé en ce que le listeau profité (3) a une section sensiblement circulaire et se trouve porté par une ou plusieurs nervures (8), à une certaine distance de la paroi interne du profilé creux (1).

8. Rail contacteur de sécurité selon l'une des revendications précédentes, caractérisé en ce que la partie de la paroi interne du profilé creux en caoutchouc faisant face au listeau profilé (3) porte une rainure à contre-dépouille (9) de dimensions adaptées à celle du listeau (3) et dont les parois internes sont conductrices au moins sur une partie de leur contour.

9. Rail contacteur de sécurité selon une des revendications précédentes, caractérisé en ce que la face interne, en regard du listeau profité, du profité creux en caoutchouc présente une rainure à contre-dépouille (9) de dimensions adaptées au listeau profité et dont les faces internes sont conductrices, au moins sur une partie de leur périphérie.

10. Rail contacteur de sécurité selon l'une des revendications précédentes, caractérisé en ce que la rainure à contre-dépouille a une section sensiblement en forme d'un U, les branches latérales de cet U présentant des bossages (2) en forme de listeaux en relief vers l'intérieur.

11. Rail contacteur de sécurité selon l'une des revendications précédentes, caractérisé en ce que le profilé creux (1) présente deux chambres (12, 13) parallèles, entre lesquelles sont prévus des bossages conducteurs (2) en forme de listeaux pénétrant dans les deux chambres qui contiennent les contreparties conductrices.

12. Rail contacteur de sécurité selon l'une des revendications précédentes, caractérisé en ce que les bossages conducteurs (2) ou listeaux profilés (3) ainsi que leurs contreparties conductrices présentent le caractère de conducteur électrique dans toute l'épaisseur de leur paroi, dans toute la section du bossage et dans toute la section de listeau.

13. Rail contacteur de sécurité selon l'une des revendications précédentes, caractérisé en ce que les profilés creux (1) portent avantageusement chacun sur deux parties opposées de leur surface externe des profils en contre-dépouille du type rainure (6) et languette (7) adaptés entre eux, permettant d'assembler l'un contre l'autre plusieurs profilés creux (1).
